(19) Europäisches Patentamt
European Patent Office
Office européen des brevets

(11) **EP 3 148 837 B1**

(12) **EUROPÄISCHE PATENTSCHRIFT**

(45) Veröffentlichungstag und Bekanntmachung des Hinweises auf die Patenterteilung:
**14.03.2018 Patentblatt 2018/11**

(21) Anmeldenummer: **15720666.5**

(22) Anmeldetag: **27.04.2015**

(51) Int Cl.:
**B60L 11/18** (2006.01)    **B60L 15/02** (2006.01)

(86) Internationale Anmeldenummer:
**PCT/EP2015/059085**

(87) Internationale Veröffentlichungsnummer:
**WO 2015/180910 (03.12.2015 Gazette 2015/48)**

(54) **VERFAHREN ZUM BATTERIEMANAGEMENT UND BATTERIEMANAGEMENTSYSTEM**

METHOD FOR BATTERY MANAGEMENT AND BATTERY MANAGEMENT SYSTEM

PROCÉDÉ DE GESTION DE BATTERIE, ET SYSTÈME DE GESTION DE BATTERIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.05.2014 DE 102014210197**

(43) Veröffentlichungstag der Anmeldung:
**05.04.2017 Patentblatt 2017/14**

(73) Patentinhaber: **Robert Bosch GmbH**
**70442 Stuttgart (DE)**

(72) Erfinder:
• **STIMM, Frank**
**70565 Stuttgart (DE)**
• **MANGOLD, Benjamin**
**70597 Stuttgart (DE)**
• **KORN, Christian**
**70190 Stuttgart (DE)**
• **LEMKE, Andreas**
**70373 Stuttgart (DE)**
• **DUFAUX, Thomas**
**70437 Stuttgart (DE)**

(56) Entgegenhaltungen:
**EP-A2- 1 526 627     WO-A1-2007/048367
GB-A- 2 286 299**

**Beschreibung**

Stand der Technik

Die Erfindung betrifft ein Verfahren zum Batteriemanagement. Die Erfindung betrifft zudem ein Computerprogramm und ein Batteriemanagementsystem, welche zur Durchführung des Verfahrens eingerichtet sind, sowie ein Kraftfahrzeug mit einer Batterie und einem derartigen Batteriemanagementsystem.

In elektrisch angetriebenen Fahrzeugen werden heutzutage als elektrische Energiespeicher (EES) oft auf Lithium-Chemie basierende Akkumulatoren eingesetzt, da diese im Vergleich zu Nickel- oder Blei-basierten Akkumulatoren die größte bisher verfügbare Energiedichte aufweisen. An Batteriesystemen, welche bei elektrisch angetriebenen Fahrzeugen eingesetzt werden, werden sehr hohe Anforderungen bezüglich nutzbarem Energieinhalt, Entladeleistung, Lade-/Entlade-Wirkungsgrad, Lebensdauer und Zuverlässigkeit gestellt. Von diesen Akkumulatoren wird eine Lebensdauer von 15 Jahren gefordert.

Ein störungsfreier Betrieb derartiger Batteriesysteme erfordert die sichere und zuverlässige Funktion der Zellen, Module und des ganzen Batteriepacks. Um diese zu erreichen, werden kontinuierlich physikalische Größen wie Stromstärken, Spannungen, Temperaturen, Isolationswiderstände und Drücke kontrolliert. Mithilfe der Messwerte dieser Größen lassen sich Management- und Betriebsfunktionen realisieren, mit denen die garantierte Lebensdauer, Zuverlässigkeit und Sicherheit des Batteriesystems eingehalten werden können. Zur Vermeidung von vorzeitiger Alterung der Akkuzellen werden beispielsweise Zellspannungsgrenzwerte und Maximalstromstärken vorgegeben.

Ein für die Alterung ganz entscheidender Parameter stellt eine mittlere quadratische Stromstärke dar. Dieser Parameter, d. h. genauer gesagt, die Wurzel daraus, wird auch $I_{RMS}$-Wert bezeichnet. Bei der mittleren quadratischen Stromstärke werden hohe Stromstärken stärker gewichtet als niedrige Stromstärken. Der $I_{RMS}$-Wert berücksichtigt daher sowohl die Entwicklung des Temperaturgradienten innerhalb der Zelle als auch Effekte von Ablagerung des Lithiums an den Elektroden, sogenanntes Lithium-Plating. Die mittlere quadratische Stromstärke wird auch geschrieben als

$$\left(I_{RMS}\right)^2 = \frac{1}{t_2} \int_{t}^{t+t_2} I^2(t)\, dt \,.$$

Für diesen Parameter existieren Grenzwerte, auf welche im Stand der Technik geregelt wird. Aus der DE 10 2011 012 818 A1 ist beispielsweise bekannt, die mittlere quadratische Stromstärke zu bestimmen und unterhalb eines vorgegebenen Sollwertes zu halten d.h.

$$\left(I_{RMS}\right)^2 < \left(I_{RMS\_lim}\right)^2 \,.$$

WO 2012/091077 offenbart ein Verfahren, bei welchem ein Gesundheitszustand (SOH, *State of Health)* aus der mittleren quadratischen Stromstärke ermittelt wird.

Da bei tiefen Temperaturen und bei dynamischem Anfahren am Berg der Grenzwert für die mittlere quadratische Stromstärke sehr kurzfristig sein Limit erreicht, beispielsweise schon nach 10 Sekunden, ist es eine Aufgabe der Erfindung, eine Erhöhung der Grenzwerte zu finden, ohne dass Einschränkungen bezüglich der garantierten Batterielebensdauer gemacht werden müssen, die beispielsweise bei etwa 15 Jahren liegt.

Offenbarung der Erfindung

Bei einem erfindungsgemäßen Verfahren zum Batteriemanagement einer Batterie mit mehreren Batteriezellen ist vorgesehen, dass ein Maximalwert einer von der Batterie abgebbaren Stromstärke anhand einer Häufigkeitsverteilung einer von der Batterie abgegebenen mittleren quadratischen Stromstärke geregelt wird.

Die Erfindung ermöglicht, die Vorgaben der Zellalterung durch Auswertung eines Historienspeichers der mittleren quadratischen Stromstärke einzuhalten. Dies gelingt durch die Regelung des Maximalwerts der von der Batterie abgebbaren Stromstärke. Der Maximalwert der von der Batterie abgebbaren Stromstärke wird dabei beispielsweise dem Batteriemanagementsystem mitgeteilt, sodass ein Inverter dementsprechend eingestellt wird und nur diesen Betrag der Stromstärke abruft.

Mit dem erfindungsgemäßen Verfahren werden Schäden am Akkumulator durch eine zu hohe Leistungsabgabe verhindert und eine gegebene Lebensdauergarantie der Batterie besser erfüllt. Dies verhindert nicht nur mögliche Schäden durch Maximalströme an der Batterie, sondern stellt sicher, dass die Batterie im gewünschten Bereich arbeitet und altert und somit nicht vorzeitig auszutauschen ist.

Vorteilhaft kann dennoch beispielsweise für einen geringen Anteil an der Gesamtbetriebszeit der Batterie ein hoher Maximalwert zugestanden werden. Beispielsweise kann dem Fahrer vorübergehend mehr Leistung ermöglicht und nur dann eingeregelt werden, wenn der Fahrer über die gesamte Betriebsdauer sehr progressiv fahren würde. Damit stellt die Erfindung eine deutliche Verbesserung gegenüber dem derzeitigen Stand der Technik dar.

Das Verfahren eignet sich insbesondere bei Batterien, die in Elektrofahrzeugen oder Hybridfahrzeugen eingesetzt werden. Die Anforderungen an diese Batterien umfassen beispielsweise, dass sie zwischen 50 Volt und 600 Volt Spannung liefern. Beispiele von geeigneten Batterietypen umfassen alle Typen von Lithium-Ionen-Batterien. Bei Anwendung des Verfahrens wird insbesondere zum einen die Entwicklung eines schädigenden Temperaturgradienten in der Batterie verhindert und zum anderen auch die Ablagerung des Lithiums an den Elektroden.

Nach einer bevorzugten Ausführungsform erfolgt die Regelung nur innerhalb einer gewährleisteten Betriebszeit, d.h. bis zum Ablauf einer gewährleisteten Betriebszeit. In einer mathematischen Formulierung der Regelung wird diese Einschränkung bei der Berechnung des Maximalwerts der von der Batterie abgebbaren Stromstärke durch Einführung eines Gewichtsfaktors umgesetzt, welcher Null gesetzt wird, falls der aktuelle Zeitpunkt $t_{akt}$ größer ist als die gewährleistete Betriebszeit $t_{gw}$, d.h.

$$w = 0 \text{, falls } t_{akt} > t_{gw}.$$

Besonders bevorzugt erfolgt die Regelung während der gewährleisteten Betriebszeit in Abhängigkeit eines Verhältnisses der aktuellen Betriebszeit $t_{akt}$ zu der gewährleisteten Betriebszeit $t_{gw}$ umso schwächer, je näher ein Ende der gewährleisteten Betriebszeit rückt. In der mathematischen Formulierung der Regelungsfunktion wird dies durch den Gewichtsfaktor gemäß

$$w = 1 - \frac{t_{akt}}{t_{gw}}$$

berücksichtigt, wobei besonders bevorzugt gilt

$$w = 1 - \frac{t_{akt}}{t_{gw}} \text{ und } w = 0 \text{, falls } t_{akt} > t_{gw}.$$

Aus der Häufigkeitsverteilung der von der Batterie abgegebenen mittleren quadratischen Stromstärke werden bevorzugt Angaben über einen Anteil in einem Niederstromstärkebereich, einen ersten Anteil in einem ersten Hochstromstärkebereich und einen zweiten Anteil in einem zweiten Hochstromstärkebereich ermittelt, wobei der erste Hochstromstärkebereich niedriger gelegen ist als der zweite Hochstromstärkebereich. Bevorzugt schließt der erste Hochstromstärkebereich direkt an den zweiten Hochstromstärkebereich an. Bevorzugt schließt der Niederstromstärkebereich ebenfalls direkt an den ersten Hochstromstärkebereich an. Die Regelung des Maximalwerts der von der Batterie abgebbaren Stromstärke erfolgt also bevorzugt anhand einer Häufigkeitsverteilung, aus welcher die relativen Anteile von zumindest drei voneinander getrennten Stromstärkebereichen ermittelt werden.

Die Regelung erfolgt dabei in Abhängigkeit von Sollvorgaben für die Anteile in den Hochstromstärkebereichen, insbesondere für Sollvorgaben für die Anteile im ersten und zweiten Hochstromstärkebereich.

Eine erste Sollvorgabe für den ersten Hochstromstärkebereich liegt bevorzugt zwischen 10% und 50%, insbesondere zwischen 20% und 40% und besonders bevorzugt bei etwa 35% der Gesamtbetriebsdauer. Eine zweite Sollvorgabe für den zweiten Hochstromstärkebereich liegt bevorzugt zwischen 1% und 10%, insbesondere zwischen 2% und 5%, besonders bevorzugt bei etwa 3% der Gesamtbetriebsdauer. Für den Niederstromstärkebereich existiert in dieser Ausführungsform keine Einschränkung, d.h. dass die Batterie für bis zu 100% der Gesamtbetriebsdauer eine mittlere quadratische Stromstärke im Niederstromstärkebereich abgeben kann.

Der erste Hochstromstärkebereich liegt beispielsweise zwischen 60 A und 100 A. Der zweite Hochstromstärkebereich liegt beispielsweise zwischen 100 A und 130 A. Der Niederstromstärkebereich liegt beispielsweise unterhalb von 60 A. Die Grenzen zur Abgrenzung der Stromstärkebereiche 60 A, 100 A und 130 A, sind zwar bevorzugte Werte, können jedoch in der Praxis auch anders definiert sein. In der Praxis wird dies durch entsprechende Testreihen festgelegt.

Erfindungsgemäß wird weiterhin ein Computerprogramm vorgeschlagen, gemäß dem eines der hierin beschriebenen Verfahren durchgeführt wird, wenn das Computerprogramm auf einer programmierbaren Computereinrichtung ausgeführt wird. Bei dem Computerprogramm kann es sich beispielsweise um ein Modul zur Implementierung eines Batteriemanagementsystems oder eines Subsystems hiervon in einem Kraftfahrzeug handeln. Das Computerprogramm kann auf einem maschinenlesbaren Speichermedium gespeichert sein, etwa auf einem permanenten oder wieder beschreibbaren Speichermedium, oder in Zuordnung zu einer Computereinrichtung oder auf einer entfernbaren CD-ROM, DVD, einer Blu-ray Disc oder einem USB-Stick. Zusätzlich oder alternativ kann das Computerprogramm auf einer Computereinrichtung wie etwa auf einem Server oder auf einem Cloud-System zum Herunterladen bereitgestellt werden, z. B. über ein Datennetzwerk, wie das Internet, oder eine Kommunikationsverbindung, wie etwa eine Telefonleitung oder eine drahtlose Verbindung.

Erfindungsgemäß ist außerdem ein Batteriemanagementsystem einer Batterie mit mehreren Batteriezellen vorgesehen, welches eine Einheit zur Ermittlung einer von der Batterie abgegebenen mittleren quadratischen Stromstärke aufweist, eine Einheit zur Auswertung einer Häufigkeitsverteilung der von der Batterie abgegebenen mittleren quadratischen Stromstärke und eine Einheit zur Einstellung eines Maximalwerts einer von der Batterie abgebbaren Stromstärke anhand von Ergebnissen der Einheit zur Auswertung der Häufigkeitsverteilung.

Bevorzugt ist das Batteriemanagementsystem zur Durchführung der hierin beschriebenen Verfahren ausgebildet und/oder eingerichtet. Dementsprechend gelten im Rahmen des Verfahrens beschriebene Merkmale entsprechend für das Batteriemanagementsystem und umgekehrt die im Rahmen des Batteriemanagementsystems beschriebenen Merkmale entsprechend für die Verfahren.

Die Einheiten des Batteriemanagementsystems sind als funktionale Einheiten zu verstehen, die nicht notwendigerweise physikalisch voneinander getrennt sind. So können mehrere Einheiten des Batteriemanagementsystems in einer einzigen physikalischen Einheit realisiert sein, etwa wenn mehrere Funktionen in Software auf einem Steuergerät implementiert sind. Die Einheiten des Batteriemanagementsystems können auch in Hardware-Bausteinen, beispielsweise durch Sensoreinheiten, Speichereinheiten und anwendungsspezifische integrierte Schaltkreise (ASIC, *Application Specific Circuit),* implementiert sein.

Erfindungsgemäß wird außerdem ein Batteriesystem mit einer Batterie, welche mehrere Batteriezellen umfasst, und einem derartigen Batteriemanagementsystem bereitgestellt. Die Batterie kann insbesondere eine Lithium-Ionen-Batterie oder eine Nickel-Metallhydrid-Batterie sein, und mit einem Antriebssystem eines Kraftfahrzeugs verbindbar sein.

Die Begriffe "Batterie" und "Batterieeinheit" werden in der vorliegenden Beschreibung dem üblichen Sprachgebrauch angepasst für Akkumulator bzw. Akkumulatoreinheit verwendet. Die Batterie umfasst eine oder mehrere Batterieeinheiten, womit eine Batteriezelle, ein Batteriemodul, einen Modulstrang oder ein Batteriepack bezeichnet sein kann. In der Batterie sind die Batteriezellen vorzugsweise räumlich zusammengefasst und schaltungstechnisch miteinander verbunden, beispielsweise seriell oder parallel zu Modulen verschaltet. Mehrere Module können sogenannte Batteriedirektkonverter (BDC, *Battery Direct Converter*) bilden, und mehrere Batteriedirektkonverter einen Batteriedirektinverter (BDI, *Battery Direct Inverter).*

Erfindungsgemäß wird außerdem ein Kraftfahrzeug mit einem derartigen Batteriesystem zur Verfügung gestellt, wobei dessen Batterie beispielsweise mit einem Antriebssystem des Kraftfahrzeugs verbunden ist. Das Kraftfahrzeug kann als reines Elektrofahrzeug ausgestaltet sein und ausschließlich ein elektrisches Antriebssystem umfassen. Alternativ kann das Kraftfahrzeug als Hybridfahrzeug ausgestaltet sein, das ein elektrisches Antriebssystem und einen Verbrennungsmotor umfasst. In einigen Varianten kann vorgesehen sein, dass die Batterie des Hybridfahrzeugs intern über einen Generator mit überschüssiger Energie des Verbrennungsmotors geladen werden kann. Extern aufladbare Hybridfahrzeuge (PHEV, *Plug-in Hybrid Electric Vehicle)* sehen zusätzlich die Möglichkeit vor, die Batterie über das externe Stromnetz aufzuladen. Bei derart ausgestalteten Kraftfahrzeugen umfasst der Fahrzyklus einen Fahrbetrieb und/oder einen Ladebetrieb als Betriebsphasen, in denen Betriebsparameter erfasst werden.

Vorteile der Erfindung

Das erfindungsgemäße Verfahren ermöglicht im Gegensatz zu einem Batteriebetrieb gemäß dem Stand der Technik kurzfristig eine höhere Entladeleistung aus der Batterie, sodass trotzdem die garantierte Betriebsdauer und die garantierte Lebensdauer der Batterie eingehalten werden.

Dabei wird die maximal mögliche Entladeleistung unter Einhaltung der garantierten Batteriebetriebsdauer derart geregelt, sodass der Fahrer idealerweise nichts merkt. Die Regelung der abgebbaren Batterieleistung erfolgt sanft, gleichmäßig und über die gesamte Batteriebetriebsdauer.

Kurze Beschreibung der Zeichnungen

Ausführungsbeispiele der Erfindung sind in den Zeichnungen dargestellt und in der nachfolgenden Beschreibung näher erläutert.

Es zeigen:

Figur 1     ein Kraftfahrzeug mit einem Batteriesystem und

Figur 2     ein Beispiel für eine Regelungsfunktion.

Ausführungsformen der Erfindung

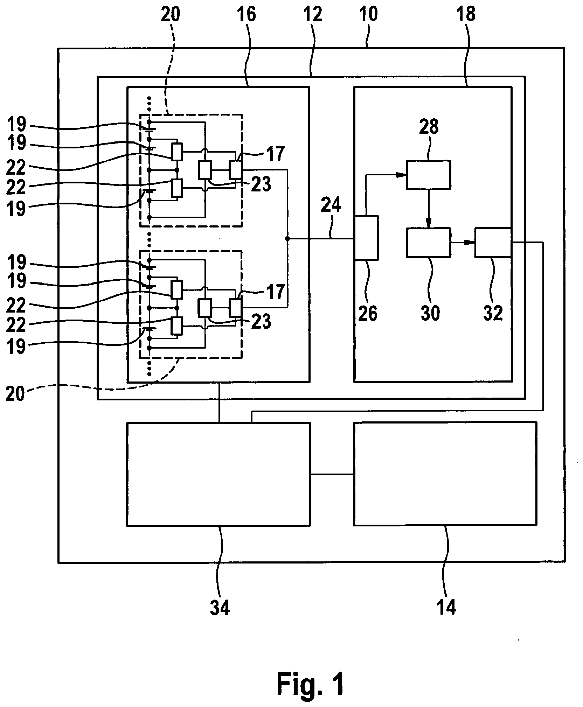

Figur 1 zeigt ein zumindest teilweise elektrisch angetriebenes Kraftfahrzeug 10 mit einem Batteriesystem 12.
Das Kraftfahrzeug 10 der Figur 1 kann als rein elektrisch angetriebenes Fahrzeug oder als Hybridfahrzeug, das zusätzlich einen Verbrennungsmotor aufweist, ausgestaltet sein. Dazu ist das Kraftfahrzeug 10 mit einem elektrischen Antriebssystem 14 ausgerüstet, das das Kraftfahrzeug 10 über einen Elektromotor (nicht dargestellt) zumindest teilweise elektrisch antreibt.
Die elektrische Energie wird von einer Batterie 16 bereitgestellt. Die Batterie 16 umfasst mehrere Batteriezellen 19 oder Akkumulatorzellen, zum Beispiel Lithiumlonenzellen mit einem Spannungsbereich von 2,8 bis 4,2 V. Die Batteriezellen 19 sind in Gruppen zu Batteriemodulen 20 zusammengefasst, und hierbei in Serie und teilweise zusätzlich parallel geschaltet, um die geforderten Leistungs- und Energiedaten mit der Batterie 16 zu erzielen.
Die Batterie 16 ist Teil eines Batteriesystems 12, das außerdem ein Batteriemanagementsystem umfasst. Das Batteriemanagementsystem umfasst ein Hauptsteuergerät 18 und mehrere Sensorsteuergeräte 17, welche den Batteriemodulen 20 zugeordnet sind.
Um einzelne Batteriezellen 19 oder Batteriemodule 20 zu überwachen, sind diese mit Zellüberwachungseinheiten 22 oder Modulüberwachungseinheiten 23 ausgestattet, die kontinuierlich, mit definierten Abtastraten Betriebsparameter, wie Spannungen, Stromstärken oder Temperaturen einzelner Batteriezellen 19 oder einzelner Batteriemodule 20 als Messwerte erfassen und die erfassten Messwerte den Sensorsteuergeräten 17 bereitstellen. Die Sensorsteuergeräte 17 empfangen die Messwerte der Sensoren der Zellüberwachungseinheiten 22 und Modulüberwachungseinheiten 23, statten die Messwerte gegebenenfalls mit Zeitstempeln aus und versenden diese über einen Kommunikationskanal 24, etwa einen SPI Bus (*Serial Peripheral Interface Bus*) oder einen CAN Bus (*Controller Area Network Bus*) an das Hauptsteuergerät 18.
Das Hauptsteuergerät 18 implementiert Funktionen zum Steuern und Überwachen der Batterie 16. Das Hauptsteuergerät 18 weist eine Einheit 26 zur Ermittlung einer von der Batterie 16 abgegebenen mittleren quadratischen Stromstärke auf. Die Einheit 26 zur Ermittlung der mittleren quadratischen Stromstärke berechnet diese gemäß

$$\left(I_{RMS}\right)^2 = \frac{1}{t_2} \int_{t}^{t+t_2} I^2(t)\,dt .$$

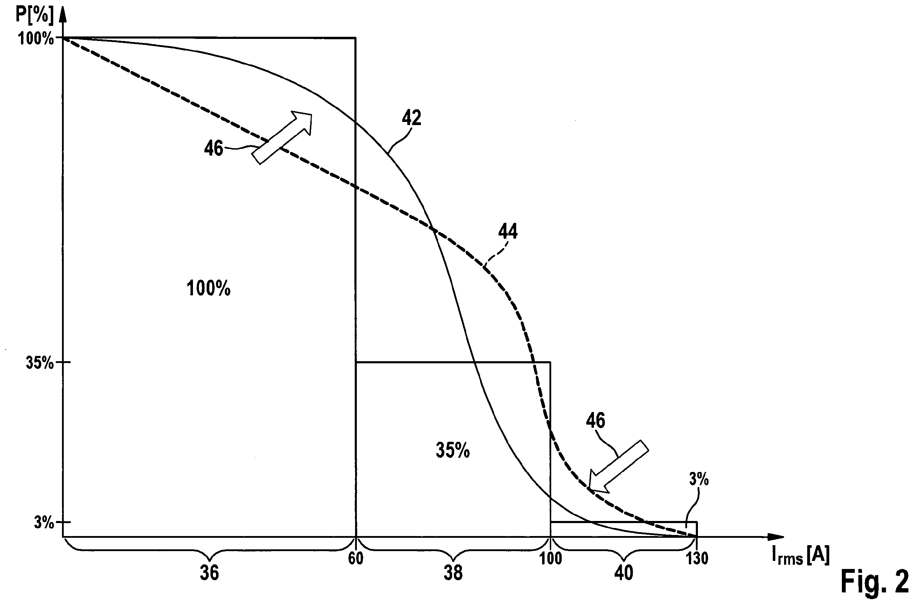

Der Zeitraum $t_2$ ist beispielsweise zwischen 10 ms und 60 s, bevorzugt etwa 0,1 s groß. Für jeden Messwert die wird die Wurzel ermittelt, womit ein $I_{RMS}$-Wert gebildet wird. Die $I_{RMS}$-Werte werden in einer Speichereinheit 28 gespeichert, wo sie eine Häufigkeitsverteilung 44 bilden, welche mit Bezug zu Figur 2 beschrieben ist.
Das Hauptsteuergerät 18 weist eine weitere Einheit 30 zur Auswertung der Häufigkeitsverteilung 44 auf, welche Zugriff auf die Speichereinheit 28 hat. Die Einheit 30 zur Auswertung der Häufigkeitsverteilung 44 ermittelt, in welchen Stromstärkebereich 36, 38, 40 der $I_{RMS}$-Wert fällt. Liegt er unterhalb von 60 A, so fällt er in den Niederstromstärkebereich 36, liegt er zwischen 60 A und 100 A, so fällt er in den ersten Hochstromstärkebereich 38, und liegt er zwischen 100 A und 130 A, so fällt er in den zweiten Hochstromstärkebereich 40. Auf die Stromstärkebereiche 36, 38, 40 wird mit Bezug zu Figur 2 näher eingegangen.
Nach dieser erfolgten Quantisierung bestimmt die Einheit 30 zur Auswertung der Häufigkeitsverteilung 44 die prozentualen Anteile der $I_{RMS}$-Werte im ersten Hochstromstärkebereich 38, d. h. $P\_i(I_{35\%})$, im zweiten Hochstromstärkebereich 40, d. h. $P\_i(I_{3\%})$, und im Niederstromstärkebereich 36, d. h. $P\_i(I_{100\%})$, und stellt diese einer Einheit 32 zur Einstellung eines Maximalwerts der von der Batterie 16 abgebbaren Stromstärke bereit.
Die Einheit 32 zur Einstellung des Maximalwerts der von der Batterie 16 abgebbaren Stromstärke regelt den Maximalwert anhand der Häufigkeitsverteilung 44 von der Batterie 16 abgegebenen mittleren quadratischen Stromstärke, insbesondere des $I_{RMS}$-Werts.
Die Einheit 32 zum Einstellen des Maximalwerts ist hierzu mit einer Wirkeinrichtung 34 verbunden, welche zwischen der Batterie 16 und einem Antriebssystem 14 angeordnet ist. Die Wirkeinrichtung 34 ist eingerichtet, den ermittelten Maximalwert in die Praxis umzusetzen, beispielsweise durch Nichterfüllung der vom Fahrer des Kraftfahrzeugs 10 per Gaspedal gewünschten Leistungsvorgaben der Batterie 16.
Die Einheit 32 zum Einstellen des Maximalwerts ermittelt in einem ersten Schritt

$$I_{RMS\_MAX} = I_{3\%RMS} + w\big(P\_i(I_{35\%}) - P(I_{3\%})\big)\cdot\big(I_{35\%} - I_{3\%}\big),$$

wobei die konkreten Prozentangaben, 3% und 35%, beispielhaft zu verstehen sind und selbstverständlich auf einen anderen Anteil festgelegt sein können.

$I_{RMS\_MAX}$ ist dabei der berechnete neue erlaubte Grenzwert des Stromes.

$P\_i(I_{35\%})$ ist der Anteil der Häufigkeitsverteilung 44 im ersten Hochstromstärkebereich 38 aus der Speichereinheit 28, d. h. der Ist-Wert der aktuellen Verteilung des entsprechenden I aus dem Historienspeicher, $P(I_{3\%})$ ist ein Sollwert für den ersten Hochstromstärkebereich 38 aus Vorgaben, z.B. aus einem Zelldatenblatt.

$I_{3\%RMS}$ ist ein festgelegter Wert, der z.B. aus dem Zelldatenblatt kommt. Zu diesem Wert gehört der Sollwert der Verteilung, d. h. $P(I_{3\%})$.

w ist ein Gewichtungsfaktor, nämlich

$$w = 1 - \frac{t_{akt}}{t_{gw}} \quad \text{und} \quad w = 0, \text{ falls } t_{akt} > t_{gw}.$$

Falls der Ist-Wert der Verteilung größer ist als der Sollwert, was meistens der Fall ist, wird insgesamt der berechnete Wert $I_{RMS\_MAx}$ kleiner, was die maximalen Durchschnittsströme in der Batterie reduziert. Dies ist das Ziel des Algorithmus, nämlich eine möglichst effiziente Einschränkung. Diese ist später auch noch reversibel, was einen Vorteil darstellt.

Falls der Ist-Wert der Verteilung kleiner ist als der Sollwert, was sehr selten der Fall ist, würde insgesamt der berechnete Wert $I_{RMS\_MAX}$ größer werden. Das darf nicht passieren, deshalb ermittelt die Einheit 32 in einem zweiten Schritt den Maximalwert gemäß

$$I_{RMS\_MAX} = \min\big(I_{RMS\_MAX}; I_{3\%RMS}\big).$$

Figur 2 zeigt ein Regelungsbeispiel, welches einen der Erfindung zugrunde liegenden Gedanken widerspiegelt. In x-Richtung ist der $I_{RMS}$-Wert dargestellt. In y-Richtung zeigt das Diagramm eine Skala, welche von 0 bis 100% reicht. Für die Quadratwurzel der von der Batterie abgegebenen mittleren quadratischen Stromstärke sind drei Bereiche dargestellt, nämlich der Niederstromstärkebereich 36, der erste Hochstromstärkebereich 38 und der zweite Hochstromstärkebereich 40. Der Niederstromstärkebereich 36 liegt dabei unterhalb von 60 A, der erste Hochstromstärkebereich 38 liegt zwischen 60 A und 100 A und der zweite Hochstromstärkebereich 40 zwischen 100 A und 130 A.

Weiterhin ist eine ideale Häufigkeitsverteilung 42 gemäß Datenblatt dargestellt, sowie eine Häufigkeitsverteilung 44 nach der Auswertung der Speichereinheit 28.

Die beiden Pfeile 46 deuten an, wie mithilfe der mit Bezug zu Figur 1 beschriebenen Regelungsfunktion die Häufigkeitsverteilung 44 so beeinflusst wird, dass der Anteil des zweiten Hochstromstärkebereichs 40 an der zulässigen Gesamtbetriebsdauer nicht überschritten wird.

Bei der Häufigkeitsverteilung 44 nimmt der Regelalgorithmus bei Bedarf den zulässigen $I_{RMS\_MAX}$-Wert sanft zurück, sodass 3% Betriebsdauer für die erhöhten Entladeströme aus dem zweiten Hochstromstärkebereich 40 nicht überschritten werden. Damit wird die Häufigkeit der geflossenen Entladeströme, d. h. $P\_i(I_{3\%})$ beeinflusst. Der $I_{RMS\_MAX}$-Wert wird kontinuierlich berechnet. Schonenden Fahrern wird dabei der für 3% der Gesamtbetriebsdauer maximal mögliche $I_{3\%RMS}$-Wert zur Verfügung gestellt. Dynamische Fahrer erhalten auf sanfte Weise einen begrenzten, d.h. equilibrierten $I_{3\%RMS}$-Wert. Bei wieder schonender Fahrweise wird auch für dynamische Fahrer der equilibrierte $I_{3\%RMS}$-Wert wieder hochgeregelt. Idealerweise wird die garantierte Betriebsdauer erreicht.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

**Patentansprüche**

1. Verfahren zum Batteriemanagement einer Batterie (16) mit mehreren Batteriezellen (19), wobei ein Maximalwert einer von der Batterie (16) abgebbaren Stromstärke anhand einer Häufigkeitsverteilung (44) einer von der Batterie (16) abgegebenen mittleren quadratischen Stromstärke geregelt wird, wobei aus der Häufigkeitsverteilung (44) Angaben über einen Anteil in einem Niederstromstärkebereich (36), einen ersten Anteil in einem ersten Hochstromstärkebereich (38) und einen zweiten Anteil in einem zweiten Hochstromstärkebereich (40) ermittelt werden, wobei der erste Hochstromstärkebereich (38) niedriger gelegen ist als der zweite Hochstromstärkebereich (40), **dadurch gekennzeichnet, dass** die Regelung in Abhängigkeit von Sollvorgaben für die Anteile im ersten und zweiten Hochstromstärkebereich (38, 40) erfolgt.

2. Verfahren nach Anspruch 1, **dadurch gekennzeichnet, dass** die Regelung nur innerhalb eines definierten Zeitraums für die Batterie (16) erfolgt.

3. Verfahren nach Anspruch 2, **dadurch gekennzeichnet, dass** die Regelung während des definierten Zeitraums für die Batterie (16) in Abhängigkeit eines Verhältnisses einer aktuellen Betriebszeit zu dem definierten Zeitraum umso schwächer erfolgt, je näher ein Ende des definierten Zeitraums rückt.

4. Verfahren nach einem der vorhergehenden Ansprüche, **dadurch gekennzeichnet, dass** eine erste Sollvorgabe für den ersten Hochstromstärkebereich (38) zwischen 10% und 50% liegt und/oder eine zweite Sollvorgabe für den zweiten Hochstromstärkebereich (40) zwischen 1% und 10% liegt.

5. Verfahren nach einem der vorhergehenden Ansprüche, **dadurch gekennzeichnet, dass** der erste Hochstromstärkebereich (38) zwischen 60 A und 100 A liegt und der zweite Hochstromstärkebereich (40) zwischen 100 A und 130 A.

6. Computerprogramm zur Durchführung eines der Verfahren nach einem der Ansprüche 1 bis 5, wenn das Programm auf einer programmierbaren Computereinrichtung ausgeführt wird.

7. Batteriemanagementsystem einer Batterie (16) mit mehreren Batteriezellen (19), dass zur Durchführung eines der Verfahren nach einem der Ansprüche 1 bis 5 eingerichtet ist, mit einer Einheit (26) zur Ermittlung einer von der Batterie (16) abgegebenen mittleren quadratischen Stromstärke, einer Einheit (30) zur Auswertung der Häufigkeitsverteilung (44) der von der Batterie (16) abgegebenen mittleren quadratischen Stromstärke und einer Einheit (32) zur Einstellung eines Maximalwerts einer von der Batterie (16) abgebbaren Stromstärke anhand von Ergebnissen der Einheit (30) zur Auswertung der Häufigkeitsverteilung (44).

8. Kraftfahrzeug (10) mit einer Batterie (16), welche ein Batteriemanagementsystem nach Anspruch 7 aufweist.

**Claims**

1. Method for battery management of a battery (16) having a plurality of battery cells (19), wherein a maximum value of a current intensity that can be output by the battery (16) is regulated on the basis of a frequency distribution (44) of a mean quadratic current intensity that is output by the battery (16), wherein indications about a component in a low current intensity range (36), a first component in a first high current intensity range (38) and a second component in a second high current intensity range (40) are determined from the frequency distribution (44), wherein the first high current intensity range (38) is lower than the second high current intensity range (40), **characterized in that** the regulation takes place depending on target specifications for the components in the first and second high current intensity range (38, 40).

2. Method according to Claim 1, **characterized in that** the regulation takes place only within a defined time period for the battery (16).

3. Method according to Claim 2, **characterized in that** the regulation takes place during the defined time period for the battery (16) depending on a ratio of a current operating time to the defined time period to a lesser extent the closer an end of the defined time period moves.

**4.** Method according to one of the preceding claims, **characterized in that** a first target specification for the first high current intensity range (38) is between 10% and 50% and/or a second target specification for the second high current intensity range (40) is between 1% and 10%.

**5.** Method according to one of the preceding claims, **characterized in that** the first high current intensity range (38) is between 60 A and 100 A and the second high current intensity range (40) is between 100 A and 130 A.

**6.** Computer program for carrying out one of the methods according to one of Claims 1 to 5 when the program is executed on a programmable computer device.

**7.** Battery management system of a battery (16) having a plurality of battery cells (19), which is configured to carry out one of the methods according to one of Claims 1 to 5, having a unit (26) for determining a mean quadratic current intensity that is output by the battery (16), a unit (30) for evaluating the frequency distribution (44) of the mean quadratic current intensity that is output by the battery (16) and a unit (32) for setting a maximum value of a current intensity that can be output by the battery (16) on the basis of results from the unit (30) for evaluating the frequency distribution (44).

**8.** Motor vehicle (10) having a battery (16), which has a battery management system according to Claim 7.

**Revendications**

**1.** Procédé de gestion de batterie d'une batterie (16) comprenant plusieurs cellules de batterie (19), une valeur maximale d'une intensité de courant pouvant être délivrée par la batterie (16) étant régulée à l'aide d'une distribution statistique (44) d'une intensité de courant quadratique moyenne délivrée par la batterie (16),
des indications à propos d'une part dans une plage de faible intensité du courant (36), une première part dans une première plage de forte intensité du courant (38) et une deuxième part dans une deuxième plage de forte intensité du courant (40) étant déterminées à partir de la distribution statistique (44), la première plage de forte intensité du courant (38) étant plus basse que la deuxième plage de forte intensité du courant (40),
**caractérisé en ce que** la régulation est effectuée en fonction d'indications de consigne pour les parts dans la première et la deuxième plage de forte intensité du courant (38, 40).

**2.** Procédé selon la revendication 1, **caractérisé en ce que** la régulation n'est effectuée qu'à l'intérieur d'une période définie pour la batterie (16) .

**3.** Procédé selon la revendication 2, **caractérisé en ce que** la régulation pendant la période définie pour la batterie (16) en fonction d'un rapport entre un temps de fonctionnement actuel et la période définie est effectuée de manière d'autant plus réduite qu'une fin de la période définie se rapproche.

**4.** Procédé selon l'une des revendications précédentes, **caractérisé en ce qu'**une première indication de consigne pour la première plage de forte intensité du courant (38) est comprise entre 10 % et 50 % et/ou une deuxième indication de consigne pour la deuxième plage de forte intensité du courant (40) est comprise entre 1 % et 10 %.

**5.** Procédé selon l'une des revendications précédentes, **caractérisé en ce que** la première plage de forte intensité du courant (38) est comprise entre 60 A et 100 A et la deuxième plage de forte intensité du courant (40) entre 100 A et 130 A.

**6.** Programme informatique destiné à mettre en oeuvre le procédé selon l'une des revendications 1 à 5 lorsque le programme est exécuté sur un dispositif informatique programmable.

**7.** Système de gestion de batterie d'une batterie (16) comprenant plusieurs cellules de batterie (19), lequel est conçu pour mettre en oeuvre un procédé selon l'une des revendications 1 à 5, comprenant une unité (26) destinée à déterminer une intensité de courant quadratique moyenne délivrée par la batterie (16), une unité (30) destinée à interpréter la distribution statistique (44) de l'intensité de courant quadratique moyenne délivrée par la batterie (16) et une unité (32) destinée à régler une valeur maximale d'une intensité de courant pouvant être délivrée par la batterie (16) à l'aide des résultats de l'unité (30) destinée à interpréter la distribution statistique (44).

**8.** Véhicule automobile (10) équipé d'une batterie (16) qui possède un système de gestion de batterie selon la revendication 7.

**Fig. 1**

Fig. 2

EP 3 148 837 B1

**EP 3 148 837 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011012818 A1
- WO 2012091077 A